# EUROPEAN PATENT APPLICATION

(11) **EP 4 239 716 A1**
(43) Date of publication of application: **06.09.2023**
(21) Application number: 22865027.1
(22) Date of filing: 30.08.2022
(51) Int. Cl.: H01M 4/134, H01M 4/62, H01M 4/38, H01M 10/052, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 01.09.2021 KR 20210116513
(71) Applicant: Samsung SDI Co., Ltd., Yongin-si, Gyeonggi-do 17084 (KR)
(72) Inventor: WAKITA, Shinya, Yongin-si, Gyeonggi-do 17084 (KR)
(74) Representative: Marks & Clerk LLP
(86) International application number: PCT/KR2022/012976
(87) International publication number: WO 2023/033525

(57) **Abstract**

Provided are a negative electrode for a rechargeable lithium battery and a rechargeable lithium battery including the same, wherein the negative electrode includes a current collector and a negative active material layer positioned on the current collector, and the negative active material layer includes a silicon-based negative active material, a room-temperature molten salt, and a volume expansion-reduced binder.

## Description

### TECHNICAL FIELD

This relates to a negative electrode for a rechargeable lithium battery and a rechargeable lithium battery including the same.

### BACKGROUND ART

Recently, the rapid supplement of electronic devices such as mobile phones, laptop computers, and electric vehicles using batteries requires surprising increases in demand for secondary batteries with relatively high capacity and lighter weight. Particularly, a lithium secondary battery has recently drawn attention as a driving power source for portable devices, as it has a lighter weight and high energy density.

A rechargeable lithium battery includes a positive electrode and a negative electrode which may include an active material being capable of intercalating and deintercalating lithium ions, and an electrolyte, and generates electrical energy due to an oxidation and reduction reaction when lithium ions are intercalated and deintercalated into the positive electrode and the negative electrode.

As for a positive electrode active material of a rechargeable lithium battery, transition metal compounds such as lithium cobalt oxides, lithium nickel oxides, and lithium manganese oxides are mainly used. As the negative electrode active material, a crystalline carbonaceous material such as natural graphite or artificial graphite, or an amorphous carbonaceous material, is used.

### TECHNICAL PROBLEM

One embodiment provides a negative electrode for a rechargeable lithium battery exhibiting high energy density and excellent cycle-life characteristics.

Another embodiment provides a rechargeable lithium battery including the negative electrode.

### TECHNICAL SOLUTION

One embodiment provides a rechargeable lithium battery including a current collector and a negative active material layer, wherein the negative active material layer includes a silicon-based negative active material, a room-temperature molten salt, and a volume expansion-reduced binder.

The volume expansion-reduced binder may be a unit derived from a poly(meth)acrylic acid-based monomer and a copolymer including a unit derived from a (meth)acrylonitrile monomer, polyvinyl alcohol, polyacrylic acid, polyacrylonitrile, polyvinylidene fluoride, or combinations thereof. In one embodiment, the volume expansion-reduced binder may be polyvinyl alcohol, polyacrylic acid, or combinations thereof.

In one embodiment, the volume expansion-reduced binder may include a copolymer including a unit derived from a poly(meth)acrylic acid-based monomer and a unit derived from a (meth)acrylonitrile monomer, as a first copolymer, and may also include a second copolymer including a unit derived from an ethylenic unsaturated monomer selected from at least one of an unsaturated carboxylic acid alkylester monomer, a (meth)acrylic acid-based monomer, and an unsaturated carboxylic acid amide monomer, and a unit derived from an aromatic vinyl-based monomer.

The room-temperature molten may include at least one cation selected from cations represented by Chemical Formula 1 to Chemical Formula 5. 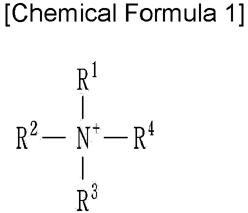
(In Chemical Formula 1,
   R¹, R², R³, and R⁴ are the same as or different from each other, and are hydrogen, an unsubstituted or substituted aliphatic, an unsubstituted or substituted aromatic, an unsubstituted or substituted heterocyclic, or an unsubstituted or substituted alkoxy. 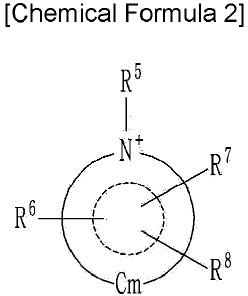
(In Chemical Formula 2,
   R⁵ is a hydrogen atom or a C1 to C5 alkyl,
   R⁶, R⁷, and R⁸ are the same as or different from each other, and are hydrogen, or a C1 to C5 alkyl, alkoxy, amino, or nitro, and
   m is 4 or 5.) 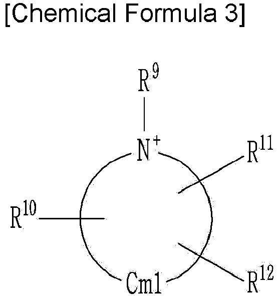
(In Chemical Formula 3,
   R⁹ is a hydrogen atom or a C1 to C5 alkyl,
   R¹⁰, R¹¹, and R¹² are the same as or different from each other, and are hydrogen, or a C1 to C5 alkyl, alkoxy, amino, or nitro, and
   m1 is an integer of 4 to 5) 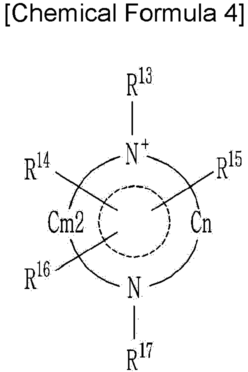
(In Chemical Formula 4,
   R¹³ is a hydrogen atom or a C1 to C5 alkyl,
   R¹⁴, R¹⁵, and R¹⁶ are the same as or different from each other, and are hydrogen, or a C1 to C5 alkyl, alkoxy, amino, or nitro,
   R¹⁷ is a C1 to C5 alkyl,
   m2 is an integer of 0 to 2, and m+n is 3 or 4.) 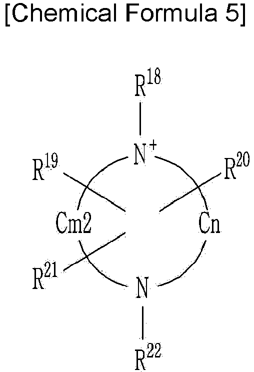
(In Chemical Formula 5,
   R¹⁸ is a hydrogen atom or a C1 to C5 alkyl,
   R¹⁹, R²⁰, and R²¹ are the same as or different from each other, and are hydrogen, or a C1 to C5 alkyl, alkoxy, amino, or nitro,
   R²² is a C1 to C5 alkyl,
   m2 is an integer of 0 to 2, and m+n is 3 or 4.)

In one embodiment, the cation may be an alkyl quaternary ammonium cation, an N-methyl-N-propyl piperidinium cation, or N,N-diethyl-N-methyl-N-(2-methoxyethyl)ammonium cation.

The room-temperature molten salt includes a fluorine atom-included anion. The fluorine atom-included anion may be BF₄⁻, PF₆⁻, CₙF₂ₙ₊₁CO₂⁻ (where n is an integer of 1 to 4), CₘF₂ₘ₊₁SO₃⁻ (where m is an integer of 1 to 4), (FSO₂)₂N⁻, (CF₃SO₂)₂N⁻, (C₂F₅SO₂)₂N⁻, (CF₃SO₂)(C₄F₉SO₂)N⁻, (CF₃SO₂)₃C⁻, CF₃SO₂-N⁻-COCF₃ or R^{a}-SO₂-N-SO₂CF₃ (where R^{a} is an aliphatic group or an aromatic group).

An amount of the room-temperature molten salt may be 0.1 wt% to 5 wt% based on the total, 100 wt%, of the negative active material layer.

An amount of the volume expansion-reduced binder may be 2 wt% to 6 wt% based on the total, 100 wt%, of the negative active material layer.

A weight ratio of the room-temperature molten salt and the volume expansion-reduced binder may be 0.1 to 1:3 by weight ratio, or 0.3 to 1: 3 by weight ratio.

The silicon-based negative active material may include Si, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition element, a rare earth element, and combinations thereof, and not Si), a Si-carbon composite, or combinations thereof.

According to another embodiment, a rechargeable lithium battery including the negative electrode, a positive electrode, and an electrolyte is provided.

### ADVANTAGEOUS EFFECTS

The negative active material according to one embodiment may exhibit high energy density and excellent cycle-life characteristics.

### BRIEF DESCRIPTION OF THE DRAWING

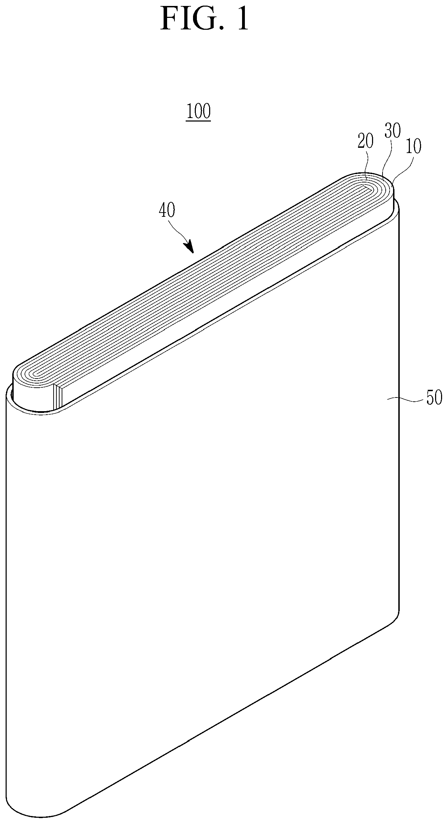

FIG. 1 is a schematic view showing a structure of the negative electrode for a rechargeable lithium battery according to one embodiment.

### MODE FOR INVENTION

Hereinafter, embodiments of the present invention are described in detail. However, these embodiments are merely examples of the present invention.

A negative electrode for a rechargeable lithium battery according to one embodiment includes a current collector and a negative active material layer positioned on the current collector, and the negative active material layer may include a silicon-based negative active material, a room-temperature molten salt, and a volume expansion-reduced binder.

The room-temperature molten salt may include at least one cation selected from cations represented by Chemical Formula 1 to Chemical Formula 5.

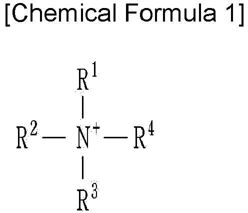

In Chemical Formula 1,
R¹, R², R³, and R⁴ are the same as or different from each other, and are hydrogen, an unsubstituted or substituted aliphatic, aromatic, heterocyclic, or unsubstituted or substituted alkoxy. The aliphatic may be, for example, alkyl, alkoxy, or alkenyl), and the alkyl may be a C1 to C8 alkyl, for example, methyl, ethyl, propyl, hexyl, octyl, and the like. Furthermore, the substituted aliphatic may be, for example, a methoxy alkyl.

The "substituted" functional group, for example, may be a C1 to C10 hydrocarbon, a hydroxy alkyl, or an alkoxy alkyl.

The aromatic may be an aryl. The heterocyclic, for example, may be pyrrole, pyridine, imidazole, pyrazole, benzimidazole, piperidine, pyrrolidine, carbazole, quinoline, pyrrolidinium, piperidinium, piperazinium, and the like.

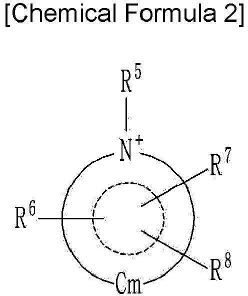

In Chemical Formula 2,
R⁵ is a hydrogen atom or a C1 to C5 alkyl,
R⁶, R⁷, and R⁸ are the same as or different from each other, and are hydrogen, or a C1 to C5 alkyl, alkoxy, amino, or nitro, and
m is 4 or 5. 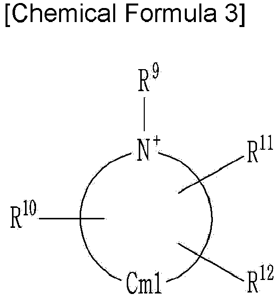
   (In Chemical Formula 3,
      R⁹ is a hydrogen atom or a C1 to C5 alkyl,
      R¹⁰, R¹¹, and R¹² are the same as or different from each other, and are hydrogen, or a C1 to C5 alkyl, alkoxy, amino, or nitro, and
      m1 is an integer of 4 to 5.) 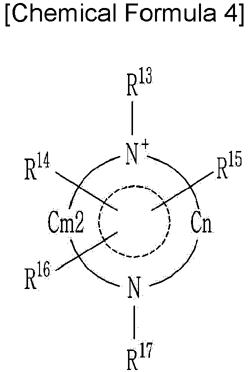
   (In Chemical Formula 4,
      R¹³ is a hydrogen atom or a C1 to C5 alkyl,
      R¹⁴, R¹⁵, R¹⁶ are the same as or different from each other, and are hydrogen, or a C1 to C5 alkyl, alkoxy, amino, or nitro,
      R¹⁷ is a C1 to C5 alkyl,
      m2 is an integer of 0 to 2, and m+n is 3 or 4.) 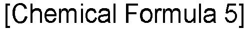 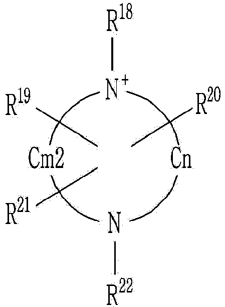
   (In Chemical Formula 5,
      R¹⁸ is a hydrogen atom or a C1 to C5 alkyl,
      R¹⁹, R²⁰, and R²¹ are the same as or different from each other, and are hydrogen, or a C1 to C5 alkyl, alkoxy, amino, or nitro,
      R²² is a C1 to C5 alkyl,
      m2 is an integer of 0 to 2, and m+n is 3 or 4.)

Chemical Formula 2 and Chemical Formula 4 are each a structure with a conjugated bond, and Chemical Formula 3 and Chemical Formula 5 are each a structure without a conjugated bond.

In one embodiment, the cation may be a cation of Chemical Formula 1 or a cation of Chemical Formula 3.

The cation of Chemical Formula 1 may be, for example, an alkyl quaternary ammonium cation. The alkyl quaternary ammonium cation may be a cation of Chemical Formula 1 in which R¹ to R³ are methyl and R⁴ is a C3 to C8 alkyl or alkenyl.

The cation of Chemical Formula 1 according to one embodiment may be, for example, an alkyl quaternary cation such as a trimethylpropyl ammonium cation, a trimethyl octyl ammonium cation, a trimethyl aryl ammonium cation, a trimethylhexyl ammonium cation, or an N,N-diethyl-N-methyl-N-(2-methoxyethyl) ammonium cation, and the like.

The cation of Chemical Formulas 2 to 5 may be, for example, a pyrrolium cation, a pyridinium cation, an imidazolium cation, a pyrazolium cation, a benzimidazolium cation, an indolium cation, a carbazolium cation, a quinolinium cation, a pyrrolidinium cation, a piperidinium cation, a piperazinium cation, or combinations thereof, and some of these functional groups may be substituted with an alkoxyalkyl group, a hydroxyalkyl group, or a hydrocarbon group having 1 to 10 carbon atoms. The exemplary may be an ethyl methylimidazolium cation, or an N-methyl-N-propylpiperidinium cation.

The room-temperature molten salt may be a fluorine atom-included anion. The fluorine atom-included anion may be BF₄⁻, PF₆⁻, CₙF₂ₙ₊₁CO₂⁻ (where n is an integer of 1 to 4), CₘF₂ₘ₊₁SO₃⁻ (where m is an integer of 1 to 4), (FSO₂)₂N⁻, (CF₃SO₂)₂N⁻, (C₂F₅SO₂)₂N⁻, (CF₃SO₂)(C₄F₉SO₂)N⁻, (CF₃SO₂)₃C⁻, CF₃SO₂-N⁻-COCF₃, or R^{a}-SO₂-N-SO₂CF₃ (where R^{a} is an aliphatic group or an aromatic group). According to one embodiment, the fluorine atom-included anion may be BF₄⁻, (FSO₂)₂N⁻, (C₂F₅SO₂)₂N⁻, or CF₃SO, or according to another embodiment may be BF₄⁻, (FSO₂)₂N⁻⁻, or (CF₃SO₂)₂N⁻.

The aliphatic group and the aromatic group have the same definition as described above.

In one embodiment, the room-temperature molten salt may include an anion with the alkyl quaternary ammonium cation and the fluorine atom-included anion, and for example, may be a room-temperature molten salt having the alkyl quaternary ammonium in which R¹ to R³ are methyl and R⁴ is a C3 to C8 alkyl or alkenyl, and the fluorine atom-included anion is (CF₃SO₂)₂N⁻, (C₂F₅SO₂)₂N⁻, or (CF₃SO₂, C₄F₉SO₂)N⁻.

The example of the room-temperature molten salt according to one embodiment may be trimethylpropyl ammonium bis(trifluoromethylsulfonyl)imide, trimethyloctyl ammonium bis(trifluoromethylsulfonyl)imide, trimethyl arylammonium bis(trifluoromethylsulfonyl)imide, trimethylhexylammonium bis(trimethylfluorosulfonyl)imide, N,N-diethyl-N-methyl-N-(2-methoxyethyl)ammonium bis(trifluoromethylsulfonyl)imide (hereinafter, referred as "DEMETFSI"), or N,N-diethyl-N-methyl-N-(2methoxyethyl)ammonium tetrafluoroborate (hereinafter, referred as "DEMEBF₄"), and the like.

The examples of the room-temperature molten salt including the cation of Chemical Formulas 2 to 5 and the fluorine atom-included anion may be 1-ethyl-3-methylimidazolium bis(trifluoromethylsulfonyl)imide (hereinafter, referred as "EMITFSI"), 1-ethyl-3-methylimidazolium tetrafluoroborate (hereinafter, referred as "EMIBF₄"), N-methyl-N-propylpiperidinium bis(trifluoromethylsulfonyl)imide (hereinafter, referred as "PP13TFSI"), N-methyl-N-propylpiperidinium bis(fluorosulfonyl)imide (hereinafter, referred as "PP13FSI"), and the like.

The inclusion of the room-temperature molten salt in the negative active material gives flexibility in the electrode preparation, thereby effectively suppressing crack occurrence. The room-temperature molten salt has a vapor pressure of zero and is included in the binder in a liquid state, and especially, may be included in a polymer matrix of the volume expansion-reduced binder which may be presented in a form of a polymer matrix, thereby causing softening of the binder. Thus, the sufficient flexibility may be imparted to the negative electrode. Furthermore, the process defects due to the separation of the active material layer in the preparation, or the non-uniformity of the battery reaction and the short circuit due to the separated product, may be prevented.

In one embodiment, an amount of the room-temperature molten salt may be 0.1 wt% to 5 wt%, 0.1 wt% to 1 wt%, or 0.3 wt% to 1 wt% based on the total, 100 wt%, of the negative active material layer. When the room-temperature molten salt is within the range, the binder having the sufficient ion conductivity may be included.

However, even if the room-temperature molten salt is used, when a binder which may be complexed with the room-temperature molten salt and has the sufficient swelling characteristics is not used together therewith, the effects for preventing crack occurrence owing to the use of the room-temperature molten salt may not be realized.

The volume expansion-reduced binder may be a unit derived from a poly(meth)acrylic acid-based monomer and a copolymer including a unit derived from a (meth)acrylonitrile monomer, polyvinyl alcohol, polyacrylic acid, polyacrylonitrile, polyvinylidene fluoride, or combinations thereof.

In one embodiment, the volume expansion-reduced binder may be polyvinyl alcohol, polyacrylic acid, or a combination thereof.

The volume expansion-reduced binder may be presented in an amount of 2 weight to 6 wt%, 2 wt% to 5 wt%, or 3 wt% to 5 wt% based on the total, 100 wt%, of the negative active material layer. When the amount of the volume expansion-reduced binder is within the range, the high adhesion strength, the volume expansion-reduced effect, and the sufficient low resistance characteristics may be obtained.

In one embodiment, the weight ratio of the room-temperature molten salt and the volume expansion-reduced binder preferably may be 0.1 to 1:3, or 0.3 to 1:3. The weight ratio of the room-temperature molten salt and the binder within the range renders to desirably include the room-temperature molten salt in the binder and to have high ionic conductivity and sufficient strength.

The silicon-based negative active material has the shortcomings related to the extreme occurrence of the volume expansion during charge and discharge, but the volume expansion-reduced binder firmly adheres the silicon-based negative active materials to each other and helps it to well adhere on the current collector, thereby effectively suppressing volume expansion. In addition, the effective inhibition of the volume expansion may improve the cycle-life characteristics.

The volume expansion hardly occurs in the carbon-based negative active material, so that the effect for suppressing the volume expansion by using the volume expansion-reduced binder is insignificant, and thus, the effect for improving the cycle-life characteristics is also insignificant. In addition, the use of the volume expansion-reduced binder in the carbon-based negative active material increases the resistance of the electrode and inhibits the reaction of the surface of the active material in the electrode.

In addition, even when the volume expansion-reduced binder is used in the positive electrode, the improvement for the cycle-life characteristics may be insignificant, similar to using it in the carbon-based negative active material.

Particularly, the improvements of the energy density and the cycle-life characteristics are obtained from the use of the room-temperature molten salt together with the volume expansion-reduced binder in the silicon-based negative active material, but may not be obtained using only one of the room-temperature molten salt and the volume expansion-reduced binder. As described in above, the effect of using the room-temperature molten salt together with the volume expansion-reduced binder is realized when used together with the silicon-based negative active material, and if they are used together with the carbon-based negative active material or the positive active material, the effects related thereto may not be realized as the resistance of the electrode is increased and the reaction of the surface of the active material in the electrode is inhibited.

In case of using a copolymer as the volume expansion-reduced binder, a copolymer including a unit derived from a poly(meth)acrylic acid-based monomer and a unit derived from a (meth)acrylonitrile monomer may be included, as a first copolymer, and a second copolymer including a unit derived from an ethylenic unsaturated monomer selected from at least one of an unsaturated carboxylic acid alkylester monomer, a (meth)acrylic acid-based monomer, and an unsaturated carboxylic acid amide monomer; and a unit derived from an aromatic vinyl-based monomer may be included.

In the first copolymer, an amount of the unit derived from the (meth)acrylic acid-based monomer may be 35 wt% to 65 wt%, and the unit derived from the (meth)acrylonitrile monomer may be 35 wt% to 65 wt%.

When the amount of the unit derived from the (meth)acrylic acid-based monomer is within the range in the first copolymer, the suitable water-solubility may be obtained and the dispersibility of the negative active material may be more improved, the stability for storage of the composition for preparing the negative electrode may be improved, and the crack occurrence in the negative electrode preparation may be effectively suppressed.

The (meth)acrylic acid-based monomer may be at least one selected from (meth)acrylic acid, an alkali metal salt of (meth)acrylic acid, and an ammonium salt of (meth)acrylic acid. Herein, the (meth)acrylic acid refers to acrylic acid or methacrylic acid. The alkali metal salt of the (meth)acrylic acid may be sodium acrylate, lithium acrylate, potassium acrylate, calcium acrylate, magnesium acrylate, sodium methacrylate, lithium methacrylate, potassium methacrylate, calcium methacrylate, and the like, and according to one embodiment, may be sodium acrylate. The ammonium salt of the (meth)acrylic acid may be an ammonia neutralized product of (meth)acrylic acid, a monoethanolamine neutralized product, a diethanolamine neutralized product, a hydroxyl amine neutralized product, and the like, and according to one embodiment, may be an ammonia neutralized product of acrylic acid.

It may include the (meth)acrylic acid-based monomer and/or a unit derived from a third monomer which is capable of copolymerizing with the (meth)acrylonitrile monomer, and an amount of the unit derived from the third monomer may be more than 0 parts by weight and 20 parts by weight or less based on the total, 100 parts, by weight of the copolymer.

The third monomer may include a hydroxyl-contained monomer or an amide-contained monomer. The hydroxyl-contained monomer, may be, for example, 2-hydroxyethyl(meth)acrylate, 2-hydroxypropyl(meth)acrylate, 4-hydroxybutyl(meth)acrylate, 2-hydroxyhexyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methylacrylate, N-methylol(meth)acrylamide, N-hydroxy(meth)acrylamide, vinyl alcohol, allyl alcohol, 2-hydroxyethylvinylether, 4-hydroxybutylvinylether, diethylene glycol monovinyl ether, and the like. The amide-contained monomer may be, for example, acrylamide, methacrylamide, diethyl(meth)acrylamide, N-vinylpyrrolidone, N-vinyl-2-pyrrolidone, N-(meth)acryloyl pyrrolidone, N,N-dimethyl acrylamide, N,N-dimethyl methacrylamide, N,N-diethyl acrylamide, N,N-diethyl methacrylamide, N,N'-methylenebisacrylamide, N,N-dimethyl amino propyl acrylamide, N,N-dimethyl amino propyl methacrylamide, and the like.

When the second copolymer is further included, the weight ratio of the first copolymer and the second copolymer may be 50 parts by weight to 95 parts by weight, or 60 parts by weight to 90 parts by weight of the first copolymer based on 100 parts by weight of the second copolymer.

When the amount of the first copolymer is satisfied in the range, the strength and the elasticity of the binder may be more improved, and the electrode expansion may be effectively suppressed, the flexibility of the binder may be improved, and the crack rarely occurs in the electrode slurry coating and drying, and thus, it readily produces an electrode, thereby improving the cycle-life characteristics of the rechargeable battery.

The aromatic vinyl-based monomer may be, for example, styrene, α-methylstyrene, methoxy styrene, trifluoromethyl styrene, divinyl benzene, and the like, and according to one embodiment, may be styrene.

The ethylenic unsaturated monomer may be at least one selected from an unsaturated carboxylic acid alkylester monomer, a (metha)acrylic acid-based monomer, and an unsaturated carboxylic acid amide monomer.

The unsaturated carboxylic acid alkylester monomer may be, for example (metha)acrylic acid 2-ethylhexyl, (metha)acrylic acid methyl, (metha)acrylic acid ethyl, (metha)acrylic acid n-butyl, (metha)acrylic acid tert-butyl, (metha)acrylic acid cyclohexyl, (metha)acrylic acid lauryl, (metha)acrylic acid benzyl, (metha)acrylic acid isobonyl, (metha)acrylic acid 2-hydroxyethyl, (metha)acrylic acid 2-hydroxypropyl, (metha)acrylic acid 4-hydroxy butyl, (metha)acrylic acid glycidyl, and the like.

Examples of the (metha)acrylic acid-based monomer may be, for example (metha)acrylic acid, maleic acid, fumaric acid, itaconic acid, and the like.

The unsaturated carboxylic acid amide monomer may be, for example, (metha)acrylamide, isopropyl acrylamide, N-methylol acrylamide, N-hydroxy ethyl acrylamide, N-hydroxy butyl acrylamide, dimethyl acrylamide, diethyl acrylamide, and the like.

In the second copolymer, an amount of the unit derived from the ethylenic unsaturated monomer may be 5 wt% or more based on 100 wt% of the second copolymer. When the amount of the unit derived from the ethylenic unsaturated monomer is 5 wt% based on 100 wt% of the second copolymer, the flexibility of the binder is improved, the crack rarely occurs in the electrode slurry coating and drying, and thus, it readily produces an electrode, and the adhesion of the negative active material layer to the substrate is improved, thereby obtaining a battery exhibiting the cycle-life characteristics.

The silicon-based negative active material may include Si, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition element, a rare earth element and combinations thereof, and not Si), a Si-carbon composite, or combinations thereof.

The Si-carbon composite may include silicon and crystalline carbon. Hereon, the silicon may be particles having an average particle diameter D50 of 10 nm to 200 nm. The Si-carbon composite may further include an amorphous carbon layer from at least portion thereon. In the specification, when a definition is not otherwise provided, an average particle diameter (D50) indicates a diameter of particles where a cumulative volume is about 50 volume% in a particle distribution. The amount of silicon in the Si-carbon composite may be 1 to 60 wt%.

The average particle diameter (D50) may be measured by a method well known to those skilled in the art, for example, by a particle size analyzer, or by a transmission electron microscopic image or a scanning electron microscopic image. Alternatively, a dynamic light-scattering measurement device is used to perform a data analysis, and the number of particles is counted for each particle size range, and from this, the average particle diameter (D50) value may be easily obtained through a calculation.

The negative active material may include the silicon-based negative active material as a first negative active material and a carbon-based negative active material as a second negative active material. Herein the mixing ratio of the first negative active material and the second negative active material may be 1:99 to 50:50 by weight ratio. More specifically, the negative active material may include the first negative active material and the second negative active material at a weight ratio of 5:95 to 20:80.

The carbon-based negative active material may include crystalline carbon, and the crystalline carbon may include artificial graphite, natural graphite, or a combination thereof.

An amount of the negative active material may be 90 wt% to 98 wt% or 92 wt% to 97 weight based on the total, 100 wt% of the negative active material layer.

The negative active material layer may further include a conductive material. When the negative active material layer further includes the binder, the negative active material layer may include the negative active material at 85 wt% to 97.9 wt%, the room-temperature molten salt at 0.1 to 5 wt%, the binder at 1 wt% to 5 wt%, and the conductive material at 1 wt% to 5 wt%.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

Another embodiment provides a rechargeable lithium battery including the negative electrode, a positive electrode, and an electrolyte.

The positive electrode may include a current collector and a positive electrode active material layer formed on the current collector.

The positive electrode active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D₂ (0.90 ≤ a ≤1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}CO_{b}X_{c}D_{α}(0.90 ≤ a ≤ 1.8, 0 ≤ b ≤ 0.5, 0 ≤ c ≤ 0.5, 0 < α ≤ 2); LiₐNi_{1-b-c}CO_{b}X_{c}O₂₋ₐT_{α} (0.90 ≤ a ≤ 1.8, 0 ≤ b ≤ 0.5, 0 ≤ c ≤0.05, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤0.05, 0 < α < 2); LiₐNi_{1-b-c}Mn_{b}X_{c}D_{α} (0.90 ≤a ≤1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤0.5, 0.001 ≤ d ≤ 0.1); LiₐNi_{b}Co_{c}Mn_{d}G_{c}O₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNi_{b}Co_{c}Al_{d}G_{c}O₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNi_{b}Co_{c}Mn_{d}G_{c}O₂ (0.90 ≤ a ≤ 1.8, 0 ≤ b ≤ 0.9, 0 ≤ c ≤ 0.5, 0 ≤ d ≤ 0.5, 0.001 ≤ e ≤0.1);LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤0.1);LiₐMn₂G_{b}O₄ (0.90 ≤ a ≤1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄ Li _{(3-f)}J₂(PO₄)₃ (0 ≤f ≤2); Li _{(3-f)}Fe₂(PO₄)₃ (0 ≤ f ≤ 2); LiₐFePO₄ (0.90 ≤ a ≤ 1.8).

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in any method having no adverse influence on properties of a positive electrode active material by using these elements in the compound (for example, the method may include any coating method such as spray coating, dipping, and the like), but is not illustrated in more detail since it is well-known in the related field.

In the positive electrode, an amount of the positive electrode active material may be 90 wt% to 98 wt% based on the total weight of the positive electrode active material layer.

In an embodiment, the positive electrode active material layer may further include a binder and a conductive material. Herein, the binder and the conductive material may be included in an amount of 1 wt% to 5 wt%, respectively, based on the total amount of the positive electrode active material layer.

The binder improves binding properties of positive electrode active material particles with one another and with a current collector. Examples thereof may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, an acrylated styrene- butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone and the like. Furthermore, the alcohol-based solvent may include ethyl alcohol, isopropyl alcohol, and the like, and examples of the aprotic solvent include nitriles such as R-CN (where R is a C2 to C20 linear, branched, or cyclic hydrocarbon, or may include a double bond, an aromatic ring, or an ether bond), amides such as dimethylformamide, dioxolanes such as 1 ,3-dioxolane, sulfolanes, and the like.

The organic solvent may be used alone or in a mixture, and when the organic solvent is used in a mixture, the mixture ratio may be controlled in accordance with a desirable battery performance, and it may be well understood to one of the relates arts.

Furthermore, the carbonate-based solvent may include a mixture with a cyclic carbonate and a linear carbonate. Herein, when the mixture of cyclic carbonate and linear carbonate mixed together in a volume ratio of about 1:1 to about 1:9 is used as an electrolyte, it may have enhanced performance.

The organic solvent may further include an aromatic hydrocarbon-based solvent as well as the carbonate-based solvent. Herein, the carbonate-based solvent and aromatic hydrocarbon-based solvent may be mixed together in a volume ratio of 1:1 to 30:1.

The aromatic hydrocarbon-based organic solvent may be an aromatic hydrocarbon-based compound represented by Chemical Formula 6. 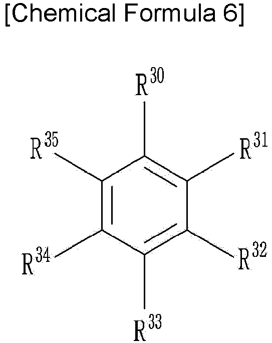 (In Chemical Formula 6 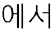 , R³⁰ to R³⁵ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound represented by Chemical Formula 7, as an additive for improving cycle life. 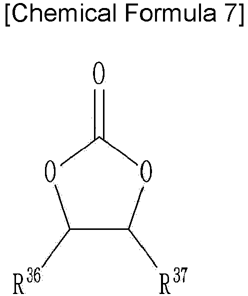 (In Chemical Formula 7, are the same or different and may each independently be hydrogen, a halogen, a cyano group (CN), a nitro group (NO₂), or a C1 to C5 fluoroalkyl group, provided that at least one of R³⁶ and R³⁷ is a halogen, a cyano group (CN), a nitro group (NO₂), or a C1 to C5 fluoroalkyl group, and R₇ and R₈ are not simultaneously hydrogen.)

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. In case of further using the additive for improving cycle life, an amount of the additive may be suitably controlled within an appropriate range.

The lithium salt dissolved in an organic solvent supplies a battery with lithium ions, basically operates the lithium secondary battery, and improves transportation of the lithium ions between positive and negative electrodes. Examples of the lithium salt may include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAICl₄, LiPO₂F₂, LiN(CₓF₂ₓ₊₁SO₂)(C_{y}F_{2y+1}SO₂), where x and y are a natural numbers, for example integers of 1 to 20), lithium difluoro(bisoxolato) phosphate), LiCl, Lil, LiB(C₂O₄)₂ (lithium bis(oxalato) borate: LiBOB), and lithium difluoro(oxalato)borate (LiDFOB). A concentration of the lithium salt may range from 0.1 M to 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a suitable separator material may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 1 is an exploded perspective view of a rechargeable lithium battery according to one embodiment. The rechargeable lithium battery according to an embodiment is illustrated as a prismatic battery, but is not limited thereto, and may include variously-shaped batteries such as a cylindrical battery, a pouch battery, and the like.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

### MODE FOR PERFORMING THE INVENTION

Hereinafter, examples of the present invention and comparative examples are described. These examples are not in any sense to be interpreted as limiting the scope of the invention.

### (Example 1)

96.9 wt% of a mixture of artificial graphite and the Si-carbon composite (95:5 weight ratio) as a negative active material, 0.1 wt% of N,N-diethyl-N-methyl-N-(2methoxyethyl)ammonium tetrafluoroborate (DEMEBF₄) as a room-temperature molten salt, and 3 wt% of polyvinyl alcohol (PVA) as a binder were mixed in a water solvent to prepare a negative active material slurry. The Si-carbon composite included silicon and artificial graphite, and the weight ratio of Si was 50 wt% therein, while the amount of Si was 2.5 wt% in the total slurry.

The negative active material slurry was coated on both surfaces of a copper foil current collector and dried followed by pressurizing to prepare a negative active material layer having a thickness on one side of 100 µm and a volume density of 1.65 g/cm³, thereby obtaining a negative electrode.

94 wt% of a LiCoO₂ positive active material, 3 wt% of a polyvinylidene fluoride binder, and 3 wt% of a ketjen black conductive material were mixed in an N-methyl pyrrolidone solvent to prepare a positive active material slurry. The positive active material slurry was coated on both sides of an Al foil current collector and dried followed by pressurizing to form a positive active material layer, thereby obtaining a positive electrode.

Using the negative electrode, the positive electrode, and an electrolyte, a rechargeable lithium cell was fabricated by the general techniques. The electrolyte was used by dissolving 1.5 M LiPF₆ in a mixed solvent of ethylene carbonate, ethyl methyl carbonate, and dimethyl carbonate (a volume ratio of 30:50:20).

### (Examples 2 to 9)

Negative electrodes were prepared by the same procedure as in Example 1, except that amounts of the room-temperature molten salt, types of the room-temperature molten salt, types and amounts of the binder, and amounts of the negative active material were changed as shown in Table 1.

Using the negative electrode and the positive electrode and the electrolyte of Example 1, rechargeable lithium cells were fabricated.

### (Comparative Examples 1 to 9)

Negative electrodes were prepared by the same procedure as in Example 1, except that amounts of the room-temperature molten salt, types of the room-temperature molten salt, types and amounts of the binder, and amounts of the negative active material were changed as shown in Table 1.

Using the negative electrode and the positive electrode and the electrolyte of Example 1, rechargeable lithium cells were fabricated.

### (Examples 10 to 14)

Negative electrodes were prepared by the same procedure as in Example 1, except that negative active materials were prepared such that the thickness on one side and the volume density shown in Table 2 were obtained.

Using the negative electrode and the positive electrode and the electrolyte of Example 1, rechargeable lithium cells were fabricated.

### (Comparative Example 10 to 14)

Negative electrodes were prepared by the same procedure as in Example 1, except that the room-temperature molten salt was not used and negative active material layers were prepared such that the thickness on one side and the volume density shown in Table 2 were obtained.

Using the negative electrode and the positive electrode and the electrolyte of Example 1, rechargeable lithium cells were fabricated.

### (Comparative Example 15)

97 wt% of a mixture of artificial graphite and Si (95:5 by weight ratio) and 3 wt% of a polyvinyl alcohol were mixed in a water solvent to prepare a negative active material slurry.

The negative active material slurry was coated on both surfaces of a copper foil current collector and dried followed by pressurizing to prepare a negative active material layer having a thickness on one side of 100 µm and a volume density of 1.65 g/cm³, thereby obtaining a negative electrode.

A DEMEBF₄ room-temperature molten salt was added in a mixed solution in which 1.5 M LiPF₆ was dissolved in ethylene carbonate, ethyl methyl carbonate, and dimethyl carbonate (a volume ratio of 30:50:20) to prepare an electrolyte.

Herein, a used amount of the room-temperature molten salt was 0.5 wt% based on the total, 100 wt%, of the electrolyte solution.

Using the negative electrode, the positive electrode, and an electrolyte, a rechargeable lithium cell was fabricated by the general techniques.

### (Example 15)

96.7 wt% of a mixture of artificial graphite and the Si-carbon composite (95:5 weight ratio) as a negative active material, 0.3 wt% of N,N-diethyl-N-methyl-N-(2methoxyethyl)ammonium tetrafluoroborate (DEMEBF₄) as a room-temperature molten salt, and 3 wt% of polyvinyl alcohol (PVA) as a binder were mixed in a water solvent to prepare a negative active material slurry.

The negative active material slurry was coated on both surfaces of a copper foil current collector and dried followed by pressurizing to prepare a negative active material layer having a thickness on one side of 100 µm and a volume density of 1.65 g/cm³, thereby obtaining a negative electrode.

Using the negative electrode, the positive electrode, and an electrolyte, a rechargeable lithium cell was fabricated by the general techniques.

### (Example 16)

A negative electrode was prepared by the same procedure as in Example 15, except that a mixture of artificial graphite and Si (90:10 by weight ratio) was used.

Using the negative electrode and the positive electrode and the electrolyte of Example 1, a rechargeable lithium cell was fabricated.

### (Comparative Example 16)

A negative electrode was prepared by the same procedure as in Example 16, except that a negative active material slurry prepared by mixing 97 wt% of a mixture of artificial graphite and Si (95:5 by weight ratio) as a negative active material and 3 wt% of a polyvinyl alcohol binder in a water solvent, was used.

Using the negative electrode and the positive electrode and the electrolyte of Example 1, a rechargeable lithium cell was fabricated.

### (Comparative Example 17)

A negative electrode was prepared by the same procedure as in Example 17, except that 97 wt% of a mixture of artificial graphite and Si (90:10 weight ratio) as a negative active material and 3 wt% of polyvinyl alcohol as a binder were mixed in a water solvent to prepare a negative active material slurry, and the negative active material slurry was used to prepare a negative electrode.

Using the negative electrode and the positive electrode and the electrolyte of Example 1, a rechargeable lithium cell was fabricated.

### (Comparative Example 18)

A negative electrode was prepared by the same procedure as in Example 16, except that 96.7 wt% of an artificial graphite negative active material, 0.3 wt% of the room-temperature molten salt, and 3 wt% of a polyvinyl alcohol binder were mixed in a water solvent to prepare a negative active material slurry, and the negative active material slurry was used to prepare a negative electrode.

Using the negative electrode and the positive electrode and the electrolyte of Example 1, a rechargeable lithium cell was fabricated.

### (Comparative Example 19)

A negative electrode was prepared by the same procedure as in Comparative Example 14, except that 97 wt% of a artificial graphite negative active material and 3 wt% of polyvinyl alcohol as a binder were mixed in a water solvent to prepare a negative active material slurry, and the negative active material slurry was used to prepare a negative electrode.

Using the negative electrode and the positive electrode and the electrolyte of Example 1, a rechargeable lithium cell was fabricated.

### (Comparative Example 20)

97 wt% of a Si negative active material and 3 wt% of polyvinyl alcohol binder were mixed in a water solvent to prepare a negative active material slurry.

The negative active material slurry was coated on both surfaces of a copper foil current collector and dried followed by pressurizing to prepare a negative active material layer having a thickness on one side of 100 µm and a volume density of 1.65 g/cm³, thereby obtaining a negative electrode.

93.9 wt% of a LiCoO₂ positive active material, 0.1 wt% of a DEMEBF₄ room-temperature molten salt, 3 wt% of a polyvinylidene fluoride binder, and 3 wt% of a ketjen black conductive material were mixed in an N-methyl pyrrolidone solvent to prepare a positive active material slurry. The positive active material slurry was coated on both sides of an Al foil current collector and dried followed by pressurizing to form a positive active material layer, thereby obtaining a positive electrode.

Using the negative electrode, the positive electrode, and an electrolyte, a rechargeable lithium cell was fabricated by the general techniques. The electrolyte was used by dissolving 1.5 M LiPF₆ in a mixed solvent of ethylene carbonate, ethyl methyl carbonate, and dimethyl carbonate (a volume ratio of 30:50:20).

### (Comparative Example 21)

93.9 wt% of a LiCoO₂ positive active material, 0.1 wt% of a DEMEBF₄ room-temperature molten salt, 3 wt% of a polyvinylidene fluoride binder, and 3 wt% of a ketjen black conductive material were mixed in an N-methyl pyrrolidone solvent to prepare a positive active material slurry. A positive electrode was prepared by the same procedure as in Comparative Example 12.

Using the negative electrode and the positive electrode and the electrolyte of Comparative Example 12, a rechargeable lithium cell was fabricated.

### (Comparative Example 22)

A positive electrode was prepared by the same procedure as in Comparative Example 12, except for using a positive active material slurry prepared by mixing 94 wt% of a LiCoO₂ positive active material, 3 wt% of a polyvinylidene fluoride binder, and 3 wt% of a ketjen black conductive material in an N-methyl pyrrolidone solvent.

Using the negative electrode and the positive electrode and the electrolyte of Comparative Example 12, a rechargeable lithium cell was fabricated.

### (Comparative Example 23)

A positive electrode was prepared by the same procedure as in Comparative Example 13, except for using a positive active material slurry prepared by mixing 94 wt% of a LiCoO₂ positive active material, 3 wt% of a polyvinylidene fluoride binder, and 3 wt% of a ketjen black conductive material in an N-methyl pyrrolidone solvent.

Using the negative electrode and the positive electrode and the electrolyte of Comparative Example 13, a rechargeable lithium cell was fabricated.

### Experimental Example 1) Evaluation of crack

The surface of the negative electrodes according to Examples 1 to 16 and Comparative Examples 1 to 23 was observed with eyes to evaluate the crack occurrence.

Among the results, the results of Examples 1 to 9 and Comparative Examples 1 to 9 are shown in Table 1 and the results of Examples 10 to 14 and Comparative Examples 10 to 14 are shown in Table 2. In addition, the result of Comparative Example 15 is shown in Table 3, and the results of Example 1 and Comparative Example 1 are also shown in Table 3, for comparison. The results of Examples 15 and 16 and Comparative Examples 16 to 19 are shown in Table 4, and the results of Comparative Examples 20 to 23 are shown in Table 5.

### Experimental Example 2) Evaluation of capacity retention

The rechargeable lithium cells according to Examples 1 to 16 and Comparative Examples 1 to 23 were charged and discharged at 1 C for 100 cycles. A ratio of the discharge capacity at 100^{th} to the discharge capacity at 1^{st} was calculated.

Among results, the results of Examples 1 to 9 and Comparative Examples 1 to 9 are shown in Table 1, and the results of Examples 10 to 14 and Comparative Examples 10 to 14 are shown in Table 2. In addition, the result of Comparative Example 15 is shown in Table 3, the results of Example 1 and Comparative Example 1 are also shown in Table 3, for comparison. The results of Examples 15 and 16 and Comparative Examples 16 to 19 are shown in Table 4, and the results of Comparative Examples 20 to 23 are shown in Table 5.

### Experimental Example 3) Measurement of energy density

Using the negative electrodes according to Examples 15 and 16 and Comparative Examples 16 to 19, a lithium metal counter electrode, and an electrolyte, a half-cell was fabricated. The electrolyte was used by dissolving 1.5 M LiPF₆ in a mixed solvent of ethylene carbonate, ethyl methyl carbonate, and dimethyl carbonate (a volume ratio of 30:50:20.

The half-cells were charged and discharged at 0.2 C once to calculate a capacity per weight of an active material, which was an energy density. A ratio of the calculated energy density relative to Comparative Example 16 using a mixture of artificial graphite and Si at a 95:5 weight ratio as a negative active material, was measured, and the results are shown in Table 4.

The abbreviations in Tables indicate the compound as below.
DEMEBF4: N,N-diethyl-N-methyl-N-(2methoxyethyl)ammonium tetrafluoroborate
EMIBF4: 1-ethyl-3-methylimidazolium tetrafluoroborate
DEMETFSI: N,N-diethyl-N-methyl-N-(2-methoxyethyl)ammonium bis(trifluoromethylsulfonyl)imide
PP13TFSI: N-methyl-N-propylpiperidinium bis(trifluoromethylsulfonyl)imide
PVA: polyvinyl alcohol
PAA: polyacrylic acid
SBR: styrene-butadiene rubber
CMC: carboxymethyl cellulose
PVdF: polyvinylidene fluoride

**(Table 1)**

| | Amount of Room-temperature molten salt (wt%) | Room-temperature molten salt | Binder | Amount of binder (wt%) | Amount of negative active material (wt%) | Negative active material layer | | | Discharge capacity retention (%) |
|---|---|---|---|---|---|---|---|---|---|
| | | | | | | Thickness on one side (µm) | Volume density (g/cm') | Crack | |
| Example 1 | 0.1 | DEMEBF4 | PVA | 3 | 96.9 | 100 | 1.65 | No | 87 |
| Example 2 | 0.5 | DEMEBF4 | PVA | 3 | 96.5 | 100 | 1.65 | No | 92 |
| Example 3 | 0.5 | EMIBF4 | PVA | 3 | 96.5 | 100 | 1.65 | No | 81 |
| Example 4 | 0.5 | DEMETFSI | PVA | 3 | 96.5 | 100 | 1.65 | No | 70 |
| Example 5 | 0.5 | PP13TFSI | PVA | 3 | 96.5 | 100 | 1.65 | No | 72 |
| Example 6 | 0.5 | DEMEBF4 | PVA | 3 | 96.5 | 100 | 1.65 | No | 90 |
| Example 7 | 0.5 | DEMEBF4 | PVA/PAA (50: 50 weight ratio) | 3 | 96.5 | 100 | 1.65 | No | 92 |
| Example 8 | 1.0 | DEMEBF4 | PVA | 3 | 96 | 100 | 1.65 | No | 90 |
| Example 9 | 5.0 | DEMEBF4 | PVA | 3 | 92 | 100 | 1.65 | No | 83 |
| Comparative Example 1 | 0 | - | PVA | 3 | 97 | 100 | 1.65 | Yes | 51 |
| Comparative Example 2 | 0 | - | PVA | 3 | 97 | 100 | 1.65 | Yes | 45 |
| Comparative Example 3 | 0 | - | PVA/PAA (50: 50 weight ratio) | 3 | 97 | 100 | 1.65 | Yes | 52 |
| Comparative Example 4 | 0.5 | DEMEBF4 | SBR/CMC (33: 67 weight ratio) | 3 | 96.5 | 100 | 1.65 | No | 24 |
| Comparative Example 5 | 0 | - | SBR/CMC (33: 67 weight ratio) | 3 | 97 | 100 | 1.65 | No | 23 |
| Comparative Example 6 | 0.5 | DEMEBF4 | PVdF | 3 | 96.5 | 100 | 1.65 | No | 23 |
| Comparative Example 7 | 0 | - | PVdF | 3 | 97 | 100 | 1.65 | No | 21 |
| Comparative Example 8 | 0.5 | DEMEBF4 | PAN | 3 | 96.5 | 100 | 1.65 | No | 32 |
| Comparative Example 9 | 0 | - | PAN | 3 | | 100 | 1.65 | Yes | 32 |

As shown in Table 1, Examples 1 to 9 using the volume expansion-reduced binder and the room-temperature molten salt together with the silicon-based active material exhibited no crack occurrence during the negative electrode preparation and excellent capacity retention. This is considered to be because the inclusion of the room-temperature molten salt in the negative active material layer allows softening of the electrode, thereby generating no crack during the electrode preparation.

It is considered that the volume expansion-reduced binder had the high ionic conductivity in the negative active material layer, so that even though the ion conduction path is blocked due to the volume expansion of the silicon-based negative active material during cycles, the high ionic conductivity of the binder allows to exhibit excellent capacity retention. Whereas, although the volume expansion-reduced binder is used, Comparative Example 1 to 3 without using the room temperature molten salt exhibited the crack occurrence during the electrode preparation and significantly lower capacity retention. This is considered to be because low impregnation of the electrolyte and blocking of the ion conduction path after expansion and shrinkage cause precipitation of lithium metal on the negative electrode, decreasing discharge capacity.

In addition, Comparative Examples 4 to 9 without using the volume expansion-reduced binder did not suppress the volume expansion of silicon and did not cause complexation of the binder with the room temperature molten salt, and thus, the room-temperature molten salt was reduction decomposed at an edge part of graphite, thereby abruptly deteriorating capacity retention.

**(Table 2)**

| | Amount of room-temperature molten salt (wt%) | Room-temperature molten salt | Binder | Amount of binder (wt%) | Amount of negative active material (wt%) | Negative active material layer | | | Discharge capacity retention (%) |
|---|---|---|---|---|---|---|---|---|---|
| | | | | | | Thickness on one side (µm) | Volume density (g/cm') | Crack | |
| Example 10 | 0.5 | DEMEBF4 | PVA | 3 | 96.5 | 72 | 1.65 | No | 95 |
| Example 11 | 0.5 | DEMEBF4 | PVA | 3 | 96.5 | 90 | 1.65 | No | 92 |
| Example 12 | 0.5 | DEMEBF4 | PVA | 3 | 96.5 | 100 | 1.60 | No | 91 |
| Example 13 | 0.5 | DEMEBF4 | PVA | 3 | 96.5 | 100 | 1.7 | No | 88 |
| Example 14 | 0.5 | DEMEBF4 | PVA | 3 | 96.5 | 110 | 1.65 | No | 82 |
| Comparative Example 10 | 0 | - | PVA | 3 | 97 | 72 | 1.65 | No | 86 |
| Comparative Example 11 | 0 | - | PVA | 3 | 97 | 90 | 1.65 | Yes | 62 |
| Comparative Example 12 | 0 | - | PVA | 3 | 97 | 100 | 1.60 | Yes | 55 |
| Comparative Example 13 | 0 | - | PVA | 3 | 97 | 100 | 1.70 | Yes | 49 |
| Comparative Example 14 | 0 | - | PVA | 3 | 97 | 110 | 1.65 | Yes | 46 |

As shown in Table 2, Examples 10 to 14 using the volume expansion-reduced binder and the room-temperature molten salt exhibited no crack occurrence during the negative electrode preparation and excellent capacity retention, even though the thickness of the negative active material and the volume density were increased. Whereas, although the volume expansion-reduced binder is used, Comparative Example 10 to 14 without using the room temperature molten salt exhibited the crack occurrence during the electrode preparation and significantly lower capacity retention, when the thickness of the negative active material and the volume density were increased.

**(Table 3)**

| | Amount of room-temperature molten salt (wt% | Room-temperature molten salt | Method of adding room temperature molten salt | Negative active material layer | | Discharge capacity retention (%) |
|---|---|---|---|---|---|---|
| | | | | Thickness on one side (µm) | Crack | |
| Example 1 | 0.5 | DEMEBF4 | Addition to negative electrode | 100 | No | 87 |
| Comparative Example 15 | 0.5 | DEMEBF4 | Addition to electrolyte | 100 | Yes | 45 |
| Comparative Example 1 | 0 | - | No addition | 100 | Yes | 51 |

As shown in Table 3, when the room-temperature molten salt was used by adding it to the electrolyte, the effects for suppressing crack occurrence and improvement in capacity retention cannot be obtained. Particularly, the room-temperature molten salt decreased the ionic conductivity of the electrolyte and was reduction-decomposed on the surface of the negative active material, and thus, the capacity retention was deteriorated.

**(Table 4)**

| | Amount of room-temperature molten salt (wt%) | Room-temperature molten salt | Active material (weight ratio) | Binder | Amount of binder (wt%) | Amount of negative active material (wt%) | Negative active material layer | | Discharge capacity retention (%) |
|---|---|---|---|---|---|---|---|---|---|
| | | | | | | | Ratio of energy density (%) | Crack | |
| Example 15 | 0.3 | DEMEBF4 | Graphite/Si (95/5) | PVA | 3 | 96.7 | 100 | No | 90 |
| Example 16 | 0.3 | DEMEBF4 | Graphite/Si | PVA | 3 | 96.7 | 113 | No | 81 |
| | | | (90/10 | | | | | | |
| Comparative Example 16 | 0 | - | Graphite/Si (95/5) | PVA | 3 | 97 | 100 | Yes | 51 |
| Comparative Example 17 | 0 | - | Graphite/Si (90/10) | PVA | 3 | 97 | 113 | Yes | 39 |
| Comparative Example 18 | 0.3 | DEMEBF4 | Graphite/Si (100/0) | PVA | 3 | 96.7 | 86.6 | No | 93 |
| Comparative Example 19 | 0 | - | Graphite/Si (100/0) | PVA | 3 | 97 | 86.6 | Yes | 92 |

As shown in Table 4, when the silicon-based negative active material was used as the negative active material, although graphite was used together therewith, the excellent capacity retention and suppression of crack occurrence by using the room-temperature molten salt and the volume expansion-reduced binder occurred.

Whereas, when only artificial graphite was used and the silicon-based active material was not used, the improvement in capacity retention was not shown. In addition, in case of using no silicon-based active material, energy density was deteriorated.

From these results, for obtaining excellent energy density and discharge capacity retention, it can be seen that the silicon-based active material is used as the negative active material and the volume expansion-reduced binder and the room-temperature molten salt are used.

**(Table 5)**

| | Amount of room-temperature molten salt (wt%) | Room-temperature molten salt | Binder | Amount of binder (wt%) | Amount of positive active material (wt%) | Positive active material layer | Discharge capacity retention (%) |
|---|---|---|---|---|---|---|---|
| | | | | | | Crack | |
| Comparative Example 20 | 0.1 | DEMEBF4 | PVA | 3 | 96.9 | No | 49 |
| Comparative Example 21 | 0.1 | DEMEBF4 | PVdF | 3 | 96.9 | No | 53 |
| Comparative Example 22 | 0 | - | PVA | 3 | 97 | Yes | 46 |
| Comparative Example 23 | 0 | - | PVdF | 3 | 97 | Yes | 51 |

As shown in Table 5, even though the room-temperature molten salt was used together with the volume expansion-reduced binder, when it was used in the positive electrode and the silicon-based negative active material was used together therewith, the improvement in capacity retention was insignificant.

While this disclosure has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A negative electrode for a rechargeable lithium battery, comprising:
a current collector; and
a negative active material layer positioned on the current collector,
wherein the negative active material layer comprises a silicon-based negative active material, a room-temperature molten salt, and an expansion-reduced binder.

2. The negative electrode for a rechargeable lithium battery of claim 1, wherein the volume expansion-reduced binder is a unit derived from a poly(meth)acrylic acid-based monomer and a copolymer including a unit derived from a (meth)acrylonitrile monomer, polyvinyl alcohol, polyacrylic acid, polyacrylonitrile, polyvinylidene fluoride, or combinations thereof.

3. The negative electrode for a rechargeable lithium battery of claim of claim 2, wherein the volume expansion-reduced binder is polyvinyl alcohol, polyacrylic acid, or combinations thereof.

4. The negative electrode for a rechargeable lithium battery of claim of claim 2, wherein the volume expansion-reduced binder includes the copolymer as a first copolymer and further includes a second copolymer including a unit derived from an ethylenic unsaturated monomer selected from at least one of an unsaturated carboxylic acid alkylester monomer, a (meth)acrylic acid-based monomer, and an unsaturated carboxylic acid amide monomer; and a unit derived from an aromatic vinyl-based monomer.

5. The negative electrode for a rechargeable lithium battery of claim of claim 1, wherein the room-temperature molten salt includes at least one cation selected from cations represented by Chemical Formula 1 to Chemical Formula 5: 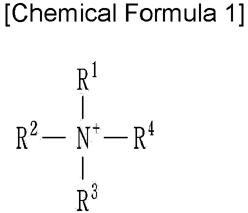
(in Chemical Formula 1,
R¹, R², R³, and R⁴ are the same as or different from each other, and are hydrogen, and an unsubstituted or substituted aliphatic, aromatic, heterocyclic, or unsubstituted or substituted alkoxy); 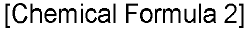 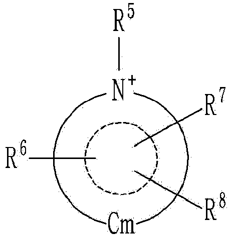
(in Chemical Formula 2,
R⁵ is a hydrogen atom or a C1 to C5 alkyl,
R⁶, R⁷, and R⁸ are the same as or different from each other, and are hydrogen, or a C1 to C5 alkyl, alkoxy, amino, or nitro, and
m is 4 or 5.) 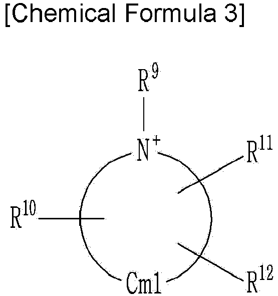
(in Chemical Formula 3,
R⁹ is a hydrogen atom or a C1 to C5 alkyl,
R¹⁰, R¹¹, and R¹² are the same as or different from each other, and are hydrogen, or a C1 to C5 alkyl, alkoxy, amino, or nitro, and
m1 is an integer of 4 to 5.) 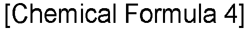 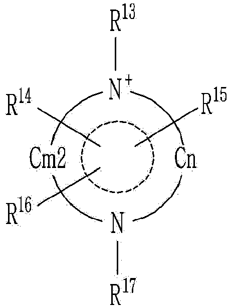
(in Chemical Formula 4,
R¹³ is a hydrogen atom or a C1 to C5 alkyl,
R¹⁴, R¹⁵, and R¹⁶ are the same as or different from each other, and are hydrogen, or a C1 to C5 alkyl, alkoxy, amino, or nitro,
R¹⁷ is a C1 to C5 alkyl,
m2 is an integer of 0 to 2, and m+n is 3 or 4); and 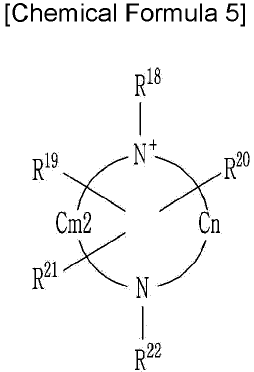
(in Chemical Formula 5,
R¹⁸ is a hydrogen atom or a C1 to C5 alkyl,
R¹⁹, R²⁰, and R²¹ are the same as or different from each other, and are hydrogen, a C1 to C5 alkyl, alkoxy, amino, or nitro,
R²² is C1 to C5 alkyl,
m2 is an integer of 0 to 2, and m+n is 3 or 4.)

6. The negative electrode for a rechargeable lithium battery of claim of claim 5, wherein the cation is an alkyl quaternary ammonium cation, an N-methyl-N-propyl piperidinium cation, or an N,N-diethyl-N-methyl-N-(2-methoxyethyl)ammonium cation.

7. The negative electrode for a rechargeable lithium battery of claim 1, wherein the room-temperature molten salt includes a fluorine atom-included anion.

8. The negative electrode for a rechargeable lithium battery of claim of claim 7, wherein the fluorine atom-included anion is BF₄⁻, PF₆⁻, CₙF₂ₙ₊₁CO₂⁻(where n is an integer of 1 to 4), CₘF₂ₘ₊₁SO₃⁻ (where m is an integer of 1 to 4), (FSO₂)₂N⁻, (CF₃SO₂)₂N⁻, (C₂F₅SO₂)₂N⁻, (CF₃SO₂)(C₄F₉SO₂)N⁻, (CF₃SO₂)₃C⁻, CF₃SO₂-N⁻-COCF₃, or R^{a}-SO₂-N⁻-SO₂CF₃(where R^{a} is an aliphatic group or an aromatic group).

9. The negative electrode for a rechargeable lithium battery of claim of claim 1, wherein an amount of the room-temperature molten salt is 0.1 wt% to 5 wt% based on the total, 100 wt%, of the negative active material layer.

10. The negative electrode for a rechargeable lithium battery of claim of claim 1, wherein an amount of the volume expansion-reduced binder is 2 wt% to 6 wt% based on the total, 100 wt%, of the negative active material layer.

11. The negative electrode for a rechargeable lithium battery of claim of claim 1, wherein a weight ratio of the room-temperature molten salt and the volume expansion-reduced binder is 0.1 to 1:3.

12. The negative electrode for a rechargeable lithium battery of claim of claim 1, wherein a weight ratio of the room-temperature molten salt and the volume expansion-reduced binder is 0.3 to 1:3.

13. The negative electrode for a rechargeable lithium battery of claim of claim 1, wherein the silicon-based negative active material includes Si, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition element, a rare earth element, and a combination thereof, and not Si), a Si-carbon composite, or combinations thereof.

14. A rechargeable lithium battery, comprising
a negative electrode of any one of claim 1 to claim 13;
a positive electrode; and
an electrolyte.
